# EUROPÄISCHE PATENTSCHRIFT

(11) **EP 2 765 354 B1**
(45) Veröffentlichungstag und Bekanntmachung des Hinweises auf die Patenterteilung: **28.11.2018**
(21) Anmeldenummer: 13154214.4
(22) Anmeldetag: 06.02.2013
(51) Int. Cl.: F21V 8/00, F21V 7/00, G02B 6/00

(54) **Leuchte mit Lichtleitscheibe**
Luminaire with light conducting disc
Lampe avec disque conducteur de lumière

(43) Veröffentlichungstag der Anmeldung: 13.08.2014
(73) Patentinhaber: Engel, Hartmut S., 71634 Ludwigsburg (DE)
(72) Erfinder: Engel, Hartmut S., 71634 Ludwigsburg (DE)
(74) Vertreter: Manitz Finsterwald Patentanwälte PartmbB

(56) Entgegenhaltungen:
- EP-A2- 2 422 964
- WO-A1-2006/065049
- WO-A2-2012/118314
- DE-U1-202011 000 598

## Beschreibung

Die Erfindung betrifft eine Leuchte mit einer zumindest teilweise von einem Rahmen umschlossenen, eine raumseitige Direktlichtfläche bildenden Lichtleitscheibe, wobei zwischen dem Rahmen und wenigstens einer Stirnfläche der Lichtleitscheibe jeweils eine Mehrzahl von LEDs zur Einkopplung von Licht in die jeweilige Stirnfläche der Lichtleitscheibe vorgesehen ist, wobei die Licht emittierenden Flächen der LEDs (14) luftspaltfrei an der jeweiligen polierten Stirnfläche (25) der transparent ausgebildeten Lichtleitscheibe (10) anliegen,

Leuchten dieser Art, die im Regelfall, aber nicht ausschließlich zur Innenraumbeleuchtung dienen, zeichnen sich durch eine flache Bauweise aus und nutzen die Vorteile der Langlebigkeit und des geringen Energieverbrauchs der als Leuchtmittel eingesetzten LEDs.

Eine Leuchte der eingangs angegebenen Art ist bekannt aus WO 2012/118314 A2. Bei dieser bekannten Leuchte wird die vorgesehene Lichtleitscheibe mit stirnseitiger Lichteinkopplung von einem einteilig ausgebildeten Rahmen U-förmig randseitig umschlossen. Angaben über das für den Rahmen verwendete Material enthält diese Druckschrift nicht, es wird aber in den Zeichnungen ausschließlich ein Lichtaustritt angrenzend und außerhalb des Rahmens dargestellt.

Aus der DE 20 2011 000 598 U1 ist eine Deckenleuchte mit einer Lichtleitplatte bekannt, in die über LED-Streifen stirnseitig Licht eingekoppelt wird. Die Lichtleitplatte ist von Kühlrahmenleisten umschlossen, die mit einem Schenkel die Lichtleitplatte untergreifen und diese randseitig tragen. Die Kühlrahmenleisten, die auch den Abstrahlbereich der Leuchte begrenzen, sind im Hinblick auf ihre Funktion metallisch ausgebildet.

Aus der EP 2 522 964 A2 sind für Displays und insbesondere für Computerdisplays Lichtleitplatten mit stirnseitiger Lichteinkopplung bekannt, die einseitig oder beidseitig mit Lichtauskopplungselementen versehen sind und auch in geschichteter Anordnung verwendet werden können, wenn herstellungsbedingt nur eine Seite mit den Lichtauskopplungselementen versehen wird.

Aufgabe der vorliegenden Erfindung ist es, Leuchten der eingangs angegebenen Art unter gleichzeitiger Minimierung des konstruktiven Aufwands und der Werkzeugkosten so auszubilden, dass sowohl frei abstrahlendes LED-Direktlicht unter Ausschaltung jeglicher Leuchtmittel-Blendeffekte als auch zumindest die Direktlichtfläche kontrastierend umgebendes Indirektlicht erhalten wird.

Gelöst wird diese Aufgabe im Wesentlichen dadurch, dass die Lichtleitscheibe von zwei aufeinanderliegenden Teil-Lichtscheiben gebildet ist, dass zumindest raumseitig an der Lichtleitscheibe anliegend ein den LEDs zugeordneter, randseitiger, aus lichtdurchlässigem Material bestehender Streifen (12) angeordnet ist, dessen Farbe in Abhängigkeit von der gewünschten, durch Lichtrückführung aus dem Streifen bewirkten Mischlichterzeugung in der Lichtleitscheibe gewählt ist, und dass die Breite und die Dicke des lichtdurchlässigen Streifens (12) so dimensioniert sind, dass der Streifen (12) bezüglich der LEDs (14) einen aus allen Blickrichtungen wirksamen Ausblendschutz bildet und über die Lichtleitscheibe (10) eingekoppeltes Licht einerseits in vorgebbare Richtungen abstrahlt und andererseits zurück in die Lichtleitscheibe (10) leitet.

Wesentlich für die Erfindung ist, dass der lichtdurchlässige Streifen direkt mit dem aus der angrenzenden Lichtleitscheibe raumseitig austretenden Licht beaufschlagt wird und dadurch bevorzugt seitlich gerichtetes Indirektlicht erzeugt wird.

Durch dieses mittels des in den entsprechenden Ausführungsformen einen umlaufenden Rahmen bildenden lichtdurchlässigen Streifens erzeugte Indirektlicht wird neben der von der Lichtleitscheibe gebildete Lichtebene eine zweite Lichtebene definiert und damit auch eine ästhetische Spannung zwischen diesen beiden bevorzugt eine unterschiedliche Lichtfarbe aufweisenden Lichtebenen geschaffen.

Aufgrund der randseitigen Positionierung der lichtdurchlässigen, rahmenförmig umlaufenden Streifen wird unter Vermeidung lichtundurchlässiger und insbesondere in ästhetischer Hinsicht störender Ausblendflächen ein perfekter Ausblendschutz erreicht, da durch diese Streifen jegliche Direktsicht auf die von den leuchtstarken LEDs gebildeten Leuchtmittel verhindert wird.

Eine weitere wesentliche Funktion des randseitig umlaufenden Streifens aus lichtdurchlässigem Material, insbesondere wenn als lichtdurchlässiges Material ein farbiges Material verwendet wird, besteht darin, dass aus diesem Material austretendes Licht zum Teil auch wieder in die Lichtleitscheibe eingekoppelt bzw. rückgekoppelt und dadurch in der Lichtleitscheibe ein Mischlicht erzeugt wird. Dies eröffnet die Möglichkeit, gezielt die Lichttemperatur in der Lichtleitscheibe zu beeinflussen.

Dieser Ein- bzw. Rückkopplungseffekt kann dann besonders wirksam genutzt werden, wenn die Voll- oder Teilabdeckung an der Kontaktfläche mit dem aus farbigem Material bestehendem lichtdurchlässigen Streifen reflektierend ausgebildet wird, da auf diese Weise ein Großteil des auf diese gebildete Reflexionsfläche auftreffende Licht wieder zurück in die Lichtleitscheibe gelangt.

Durch diesen Licht-Rückkopplungseffekt kann demgemäß durch farbige lichtleitende Streifen die Farbtemperatur der weißen Direktlichtfläche bewusst moduliert werden und zwar in Richtung "warm" durch Verwendung von Gelb- und Rot-Tönen des lichtleitenden Streifens und in Richtung "cool" durch Verwendung von Blau- und Grün-Tönen im lichtleitenden Streifen.

Eine besonders vorteilhafte Ausgestaltung der Erfindung zeichnet sich dadurch aus, dass zur Vorspannungserzeugung und zum Toleranzausgleich zwischen den an den polierten Stirnflächen der Lichtleitscheibe anliegenden LEDs und dem Rahmen eine wärmeleitend und elastisch ausgebildete Zwischenschicht vorgesehen ist. Dadurch wird nicht nur eine stets luftspaltfreie Anlage der LEDs an der Lichtleitscheibe sichergestellt, sondern auch eine optimale Wärmeableitung zum Rahmen und/oder einem speziell am Rahmen vorgesehenen Kühlkörper gewährleistet.

Eine Mischlichtbildung in der Lichtleitscheibe kann nicht nur über die einen umlaufenden Rahmen bildenden Streifen aus farbigem Material erfolgen, sondern alternativ oder gleichzeitig dadurch, dass die jeweils den sich gegenüberliegenden polierten Stirnflächen der Lichtleitscheibe zugeordneten LEDs zur vorzugsweise steuerbaren Mischlichtbildung in der Lichtleitscheibe unterschiedliche Lichttemperatur aufweisen, die insbesondere auf der einen Seite dem Bereich von etwa 2700°K bis 3000°K und auf der gegenüberliegenden Seite den Bereich von 5000°K bis 6500°K entsprechen und vorzugsweise zur Tageslichtsimulation regelbar sind.

Nach weiteren Ausgestaltungen der Erfindung können der Lichtleitscheibe zur Beeinflussung der Leuchtdichte und/oder der Abstrahlcharakteristik ein- oder beidseitig Prismatik-, Opal- oder Reflektorfolien bzw. entsprechende Scheiben zugeordnet werden, sodass entweder nur nach unten in den Raum abstrahlendes Direktlicht oder gleichzeitig auch nach oben zur Decke gerichtetes Indirektlicht aus der Lichtleitscheibe ausgekoppelt wird.

Eine bevorzugte Ausführungsform der Erfindung in Form einer abgehängten Innenraumleuchte bzw. Pendelleuchte kennzeichnet sich dadurch, dass der Rahmen aus einem einen zumindest einen vertikalen und einen raumseitigen horizontalen Schenkel aufweisenden Montagerahmen, insbesondere für elektrische Komponenten, Verdrahtungen und Kühlkörper, bildenden Profilrahmen besteht, dass mit dem Profilrahmen eine untere flachrahmenförmige Gehäusefläche verbunden ist, auf deren innenliegendem Randbereich der Lichtleitscheibe abgestützt ist, und dass der umlaufende lichtdurchlässige Streifen einen zwischen der Lichtleitscheibe und dem Stütz-Randbereich der unteren Gehäusefläche gelegenen Klemmschenkel aufweist.

Durch die Integration aller funktionsnotwendigen Komponenten in den Montagerahmen wird nicht nur die Fertigung erleichtert und vereinfacht, sondern eine mechanisch stabile Basiseinheit der Leuchte geschaffen, die mit hinsichtlich der Abstrahlcharakteristiken unterschiedlicher Direktlichtoptik und zweiter Lichtebene, realisiert durch Lichtleitscheibe und umlaufenden Streifen aus lichtdurchlässigem Material kombiniert werden kann.

Bei dieser Ausführungsform der Erfindung kann vorgesehen sein, dass durch Verwendung geeigneter Ausblendraster aus der Lichtleitscheibe neben dem nach unten strahlenden Direktlicht auch nach oben gerichtetes Indirektlicht ausgekoppelt wird, aber es kann nach einer weiteren Ausgestaltung auch vorgesehen sein, dass der unteren Gehäusefläche eine obere Gehäuseabdeckung mit einer durch eine Diffusoroptik verschlossenen Lichtaustrittsöffnung zugeordnet wird und im Gehäuse oberhalb der in diesem Fall eine Reflektorfolie tragenden Lichtleitscheibe eine Indirektlichtwanne mit im Bereich der Lichtaustrittsöffnung vorgesehener, insbesondere getrennt ansteuerbarer LED-Bestückung vorgesehen ist.

Insbesondere können zur Erzeugung von indirektem RGB-Licht in der Indirektlichtwanne mehrere getrennt ansteuerbare LED-Einheiten unterschiedlicher Lichttemperatur angebracht werden, wobei diese einzelnen LED-Einheiten bevorzugt auf in ihrer räumlichen Ausrichtung veränderbaren Trägerflächen angebracht werden, so dass auf einfache Weise die Abstrahlcharakteristik des Indirektlichts verändert werden kann.

Bei der vorstehend geschilderten Ausführungsform der Erfindung ist der Lichtleitscheibenbereich im ausgeschalteten Zustand der Leuchte aufgrund der angrenzend an die Oberseite der Lichtleitscheibe vorgesehenen Reflektorfolie nicht transparent, d.h. nicht durchsichtig. Eine weitere Ausgestaltung dieser Konstruktion, bei der die elektrischen und elektronischen Komponenten im Rahmen untergebracht sind, verwendet eine ein- oder mehrschichtige transparente Lichtleitscheibe, bei der die das Licht auskoppelnden Elemente entweder in eine Oberfläche der Lichtleitscheibe dreidimensional eingeprägt sind oder auf die Scheibenoberfläche ein stark reflektierendes, hochweiße Punktmuster aufgebracht ist. Durch geeignete Ausgestaltung dieser Auskoppelelemente bleibt die Lichtleitscheibenanordnung im ausgeschalteten Zustand analog einer Fensterscheibe durchsichtig, wodurch eine Leuchte erhalten wird, die im nicht eingeschalteten Zustand lediglich durch ihren leicht und elegant wirkenden Rahmen in Erscheinung tritt.

Eine weitere besonders vorteilhafte Ausgestaltung der Erfindung, die sich durch eine extrem geringe Aufbauhöhe und besondere Leichtigkeit in ihrem Erscheinungsbild auszeichnet, besteht darin, dass der Rahmen als U-förmiger, das Außengehäuse der Leuchte im Wesentlichen bildender Profilrahmen ausgeführt ist, dass im Profilrahmen ein metallischer, insbesondere abgewinkelt ausgebildeter Träger für die mit dem LED-Träger verbundene elastische, wärmeleitende Zwischenschicht vorgesehen ist, dass der umlaufende lichtdurchlässige Streifen auf dem raumseitigen Schenkel des Profilrahmens und die Lichtleitscheibe auf dem Streifen abgestützt ist, und dass die elektrischen Komponenten, insbesondere Treiber und Steuergeräte, in einem separaten Gehäuse angeordnet und über Niederspannungsleitungen mit den LEDs verbunden sind.

Diese Ausführungsform, die sowohl als Pendelleuchte als auch als Einbauleuchte oder Anbauleuchte realisierbar ist, weist alle Vorteile der bereits beschriebenen Ausführungsvarianten auf, ermöglicht aber durch die Auslagerung aller Raum beanspruchenden elektrischen bzw. elektronischen Komponenten in eine separate Einheit ein minimalistisches Design, wobei im Falle einer Pendelleuchte durch entsprechende Licht-Auskopplung aus der Lichtleitscheibe neben direktem, in den Raum abgestrahltem Licht auch indirektes, gegen die Decke gerichtetes Licht erzeugt werden kann.

Bei allen Ausführungsformen von Leuchten, die eine Lichtleitscheibenanordnung mit in die Oberfläche integrierten Auskoppelprismen oder auf die Oberfläche aufgebrachten hochweißen Punkten arbeiten, ergibt sich aufgrund der Durchsichtigkeit der Leuchte im Lichtscheibenbereich im nicht eingeschalteten Zustand eine spannungsreiche Ästhetik des Erscheinungsbildes im Wechsel zwischen nicht eingeschalteter Leuchte und beleuchteter Lichtfläche.

Unter Nutzung des erfindungsgemäßen Konstruktionsprinzips ist es auch möglich, rahmenlose, horizontal anzuordnende oder vertikal zu montierende Wandleuchten zu schaffen, wobei ein Trägerhohlprofil zur Aufnahme der elektrischen Komponenten und zur Halterung des Randbereichs einer Lichtleitscheibe vorgesehen und die Halterung U-förmig ausgebildet ist, wobei diese Halterung die an der Stirnseite der Lichtleitscheibe anliegenden LEDs sowie den einseitig oder die beidseitig zwischen den Schenkeln der U-förmigen Halterung und der Lichtleitscheibe angeordneten lichtdurchlässigen Streifen aufnimmt.

Des Weiteren ist es im Rahmen der Erfindung möglich, zur Schaffung einer rahmenlosen, mittensymmetrischen Leuchte, insbesondere von Pendel- oder Anbauleuchten, ein lang gestrecktes, aus mehreren Komponenten bestehendes ggf. zur Aufnahme aller elektrischen und elektronischen Komponenten geeignetes Profilgehäuse mit seitlich angeordneten, sich über die Gehäuselänge erstreckenden U-förmigen Aufnahmen vorzusehen, wobei in jeder der U-förmigen Aufnahmen ein Randbereich einer Lichtleitscheibe, deren Breite einem Mehrfachen der Breite des Profilgehäuses entspricht, sowie zumindest ein an einer Seite des Randbereichs der Lichtleitscheibe anliegender lichtdurchlässiger Streifen gehaltert sind und die an den polierten Stirnseiten der Lichtleitscheiben anliegenden LEDs über eine wärmeleitende Struktur mit dem Boden der U-förmigen Aufnahme verbunden sind.

Weitere vorteilhafte Merkmale der Erfindung werden nachfolgend bei der Beschreibung von Ausführungsbeispielen unter Bezugnahme auf die Zeichnungen erläutert.

In der Zeichnung zeigt:
- Fig. 1: in einer Explosionsdarstellung die Einzelkomponenten einer ersten Ausführungsform einer erfindungsgemäßen Leuchte,
- Fig. 2: eine Schnittansicht der aus den Komponenten nach Fig. 1 aufgebauten Leuchte,
- Fig. 3: eine Teil-Schnittdarstellung wesentlicher Elemente der Leuchte nach Fig. 2,
- Fig. 4: eine Draufsicht der Rückseite einer Ausführungsvariante der Leuchte gemäß der Erfindung,
- Fig. 5: eine Teilschnittdarstellung einer Ausführungsvariante der Leuchte nach Fig. 2, die im Lichtleitscheibenbereich im ausgeschalteten Zustand durchsichtig ist,
- Fig. 6: eine Variante der Ausführungsform nach Fig. 4,
- Fig. 7: eine Teilschnittdarstellung einer minimale Bauhöhe aufweisenden Pendelleuchte mit separatem Energieversorgungsteil,
- Fig. 8: eine detaillierte Schnittansicht der Ausführungsform nach Fig. 7,
- Fig. 9: eine schematische Darstellung einer Variante der Leuchte nach Fig. 5,
- Fig. 10: eine schematische Darstellung einer Ausführungsform der Erfindung in Form einer Wandleuchte mit vertikal angeordneter Lichtleitscheibe,
- Fig. 11: eine entsprechende Darstellung einer Ausführungsvariante einer Wandleuchte mit horizontal angeordneter Lichtleitscheibe,
- Fig. 12: eine Teilschnittdarstellung des mittigen Bereichs einer Ausführungsform einer Pendelleuchte,
- Fig. 13: eine gemäß der Erfindung ausgebildete Pendelleuchte mit kreisförmiger Lichtleitscheibe, und
- Fig. 14: eine Teilschnittdarstellung der Leuchte nach Fig. 13.

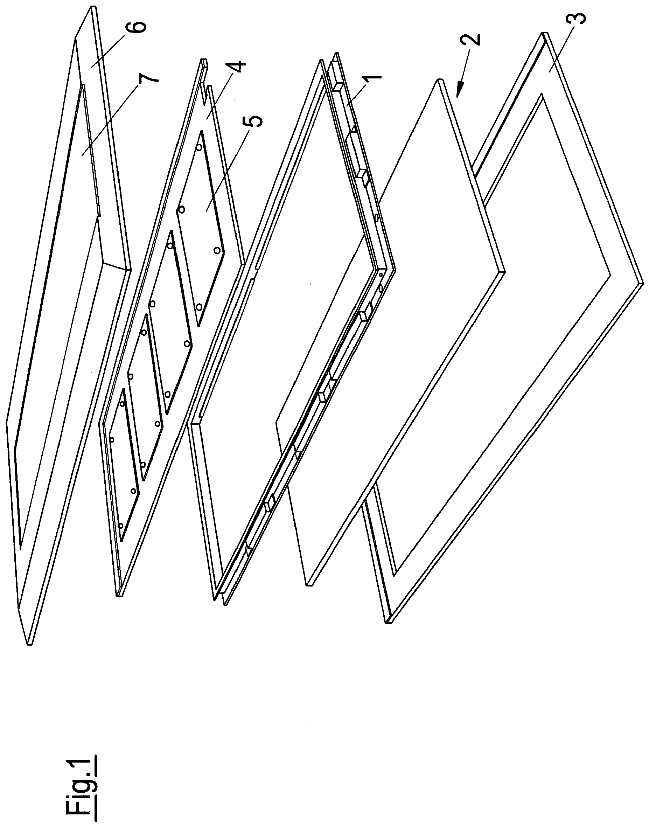

Fig. 1 zeigt in Form einer Explosionsdarstellung die Grundkomponenten einer bevorzugten Ausführungsform der Erfindung in Form einer Pendelleuchte zur Erzeugung von direktem und indirektem Licht.

Die Hauptkomponente dieser Leuchte wird von einem Montage- bzw. Trägerrahmen 1 gebildet, der bevorzugt aus einem metallischen U-Profilmaterial besteht, wobei die elektrischen bzw. elektronischen Komponenten wie Treiber und Verdrahtung und gegebenenfalls auch mechanische Komponenten wie Kühlkörper in den Profilaufnahmeräumen angebracht sind. Innenseitig trägt dieser Rahmen 1 an zwei einander gegenüberliegenden Stirnflächen die jeweiligen LED-Einheiten.

Eine im Einzelnen noch zu erläuternde Direktlichtoptik mit zweiter Lichtebene ist an der Unterseite des Rahmens 1 angeordnet und wird von einer unteren Gehäusefläche 3 gehalten, die sich über die Außenkontur des Rahmens 1 hinaus allseitig erstreckt.

Oberhalb des Montagerahmens 1 ist eine Indirektlichtwanne 4 mit LED-Bestückung 5 vorgesehen, die zur deckenseitigen Abstrahlung von Indirektlicht dient und bevorzugt unabhängig von der Direktlichtoptik ansteuerbar ist.

Eine obere Gehäuseabdeckung 6 mit Diffusoroptik 7 ist in gleicher Weise wie die untere Gehäusefläche 3 mit dem Montagerahmen 1 verbindbar, so dass im montierten Zustand ein geschlossenes Gehäuse aus unterer Gehäusefläche 3 und oberer Gehäuseabdeckung 6 vorliegt, wobei die untere Gehäusefläche 3 die Direktlichtaustrittsfläche und die obere Gehäuseabdeckung 6 die Indirektlicht-Austrittsfläche begrenzen.

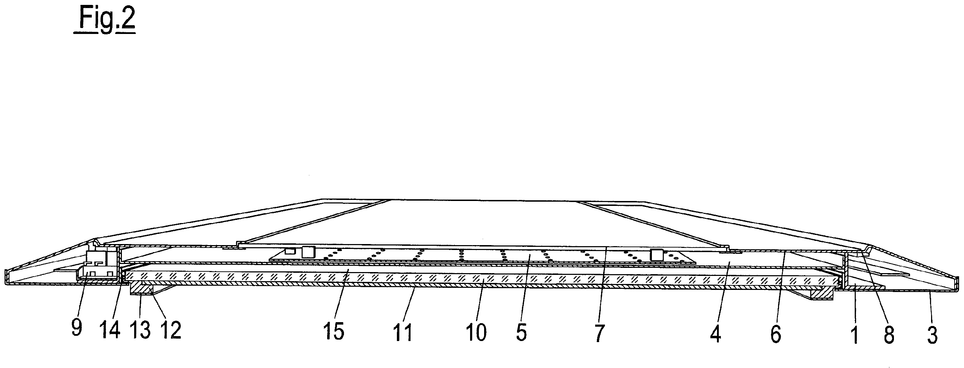

In Fig. 2 ist die aus den Komponenten nach Fig. 1 aufgebaute Ausführungsform einer erfindungsgemäßen Leuchte in einer Schnittdarstellung gezeigt.

Innerhalb des Profil-Montagerahmens 1 ist im unteren Bereich die von einer Lichtleitscheibe 10, einem randseitig umlaufenden lichtdurchlässigen Streifen 12 gebildete Direktlichtoptik sowie darüber die Indirektlichtwanne angeordnet. Im Bereich des Profilraums des Montagerahmens 1 befinden sich die elektrischen Komponenten 9 und mit den Schenkeln des Profilrahmens 1 sind die untere Gehäusefläche 3 sowie die obere Gehäuseabdeckung 6 verbunden.

Die für die Aufhängung der Pendelleuchte erforderlichen Seile werden in Aufhängeösen 8 fixiert, die in den oberen Schenkelteilen des Montagerahmens 1 ausgebildet sind.

In der Indirektlichtwanne ist eine vorgebbare Anzahl von flächigen LED-Einheiten 5 vorgesehen, die das Indirektlicht über eine in einer Öffnung der Gehäuseabdeckung 6 angebrachte Diffusoroptik abgeben. Die LED-Bestückung kann dabei in der Weise erfolgen, dass eine in manchen Fällen erwünschte RGB-Lichterzeugung bzw. Lichtsteuerung möglich ist.

Die innerhalb des Montagerahmens 1 gelegene Lichtleitscheibe koppelt seitlich eingebrachtes Licht bevorzugt durch integrierte Prismenstrukturen gleichmäßig über die Plattenfläche wieder aus, wobei die raumseitig gelegene Direktlichtaustrittsfläche üblicherweise als Planfläche ausgebildet ist, während die rückwärtige, d.h. deckenseitig gelegene Fläche mit Mikroprismenstrukturen versehen ist, bei denen es sich um optische, reflektierende bzw. refraktive Strukturen für den Direktlichtanteil bzw. Indirektlichtanteil handelt. Die Einkopplung von Licht in die Lichtleitscheibe erfolgt über lineare LED-Leisten 14, die an einander gegenüberliegenden, vorzugsweise polierten Stirnflächen 25 der insbesondere aus Plexiglas bestehenden Lichtleitscheibe anliegen.

In der in Fig. 2 gezeigten Ausführungsform ist die Oberseite der Lichtleitplatte 10 mit einer Reflektorfolie 15 bedeckt, so dass eine Lichtauskopplung nur zur Raumseite hin erfolgt. An der Raumseite der Lichtleitscheibe 10 ist im gezeigten Ausführungsbeispiel eine Prismatikfläche zur Vergleichmäßigung und/oder Reduzierung der Leuchtdichte angeordnet. Randseitig abgestützt ist die Lichtleitscheibe 10 über einen Schenkel eines lichtdurchlässigen Streifens 12 an einem innenliegenden Stützrand der unteren Gehäusefläche 3. Der lichtdurchlässige Streifen 12 steht über die von der Abdeckung 3 gebildete untere Leuchtenebene vor und umschließt die Lichtleitscheibe 10 rahmenartig. An der außenliegenden Unterseite des lichtdurchlässigen Streifens 12 ist eine Abdeckung 13 vorgesehen, die als Voll- oder Teilabdeckung ausgebildet sein kann.

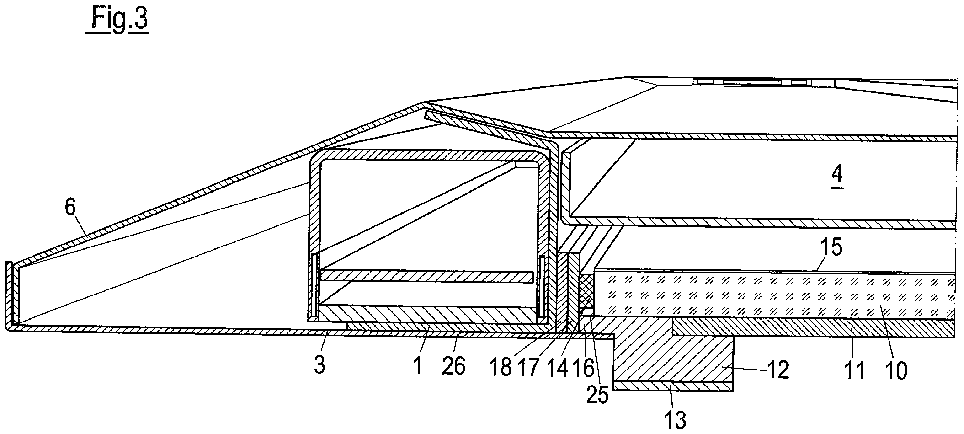

Für die Funktionsweise der erfindungsgemäßen Leuchte wesentliche Aspekte werden anhand der eine Teil-Schnittdarstellung der Leuchte nach Fig. 2 zeigenden Fig. 3 erläutert.

Die Detaildarstellung nach Fig. 3 zeigt wiederum die untere Gehäusefläche 3 sowie die obere Gehäuseabdeckung 6 und den sie tragenden Montagerahmen 1. Im Innenbereich des geschlossenen Montagerahmens 1 befindet sich zum einen die Indirektlichtwanne 4 und zum anderen die Direktlichtoptik mit der Lichtleitscheibe 10, dem randseitig umlaufenden lichtdurchlässigen Streifen 12 sowie der sich entlang mindestens einer Stirnfläche 25 der Lichtleitscheibe 10 erstreckenden, streifenförmigen LED-Anordnung 14, die auf einem metallischen Träger 17 angebracht ist, welcher wiederum über eine elastische, wärmeleitende Zwischenschicht 18 mit der Vertikalwand des Montagerahmens 1 verbunden ist.

Durch die vorzugsweise vorgesehene, elastisch und wärmeleitend ausgebildete Zwischenschicht 18 wird einerseits sichergestellt, dass die LEDs luftspaltfrei an der vorzugsweise polierten Stirnfläche 25 der Lichtleitscheibe 10 anliegen und andererseits die von dem LEDs erzeugte Wärme sicher zu dem metallischen Trägerrahmen 1 und gegebenenfalls einem an diesem noch vorgesehenen Kühlkörper abgeführt werden kann. Die elastische, wärmeleitende Zwischenschicht 8 stellt dabei auch ein Toleranzausgleichselement dar und kann aus einem Schaumkörper bestehen.

Der an den lichtdurchlässigen Streifen 12 angeformte Schenkel 16 liegt auf dem inneren Stütz-Randbereich 26 der unteren Gehäusefläche auf, und auf diesem Klemmschenkel 16 ist wiederum umlaufend der Randbereich der Lichtleitscheibe 10 abgestützt, auf deren Oberseite eine Reflektorfolie 15 aufliegt und an deren Unterseite, gehalten in einer Ausnehmung des lichtdurchlässigen Streifens 12, eine opale Fläche oder Prismatikfläche 11 vorgesehen ist.

Das aus der Lichtleitscheibe 10 aufgrund der vorgesehenen Reflektorfolie 15 ausschließlich raumseitig austretende Direktlicht gelangt auch unmittelbar in den umlaufenden lichtdurchlässigen Streifen 12, aus dem es wiederum über die nicht mit einer Abdeckung versehenen Flächen austreten kann. In dem in Fig. 3 dargestellten Fall erfolgt ein entsprechender Lichtaustritt seitlich nach innen zur Lichtleitscheibe hin und seitlich nach außen, wodurch eine Aufhellung der Unterseite der unteren Gehäusefläche 3 bewirkt wird. Die für Licht nicht durchlässige Abdeckung 13 an der Unterseite des Streifens 12 trennt den innenliegenden Direktlichtbereich optisch klar von dem außenliegenden Gehäusebereich ab, der von dem aus dem Streifen 12 nach außen austretenden Licht beaufschlagt ist.

Der im geschilderten Ausführungsbeispiel einen geschlossenen Rahmen bildende lichtdurchlässige Streifen 12 besteht bevorzugt aus farbigem Material, und in diesem Falle wird durch die Erfindung ein gezielter Licht-Rückkopplungseffekt erzielt, der es gestattet, das im Regelfalle weiße Licht der Lichtleitscheibe 10 so zu modulieren, dass auf Wunsch eine wärmere oder kältere Lichtfarbe als Direktlicht erhalten wird.

Das aus der Lichtleitscheibe 10 nach unten austretende Licht gelangt nämlich im Umfangs-Randbereich der Lichtscheibe 10 direkt in den farbigen Lichtstreifen 12 und wird in diesem Lichtstreifen 12 insbesondere dann, wenn die Abdeckung 13 reflektierend ausgebildet ist, zu einem wesentlichen Teil aufgrund von Reflexionen wieder zurück in die Lichtleitscheibe geleitet, so dass das farbig zurückreflektierte bzw. rückgekoppelte Licht sich mit dem weißen Licht der Lichtleitscheibe mischt. Das Ausmaß dieser Rückkopplung kann durch Vorsehen reflektierender Flächen am Streifen 12 sowie auch durch die Wahl der Breite dieses Streifens 12 gezielt beeinflusst werden.

Sowohl die Abbildung nach Fig. 2 als auch insbesondere die Abbildung nach Fig. 3 macht deutlich, dass durch den umlaufenden lichtdurchlässigen Streifen 12, insbesondere in Verbindung mit der Abdeckung 13 ein perfekter Ausblendschutz bezüglich der hellen LED-Streifen 14 erzielt wird. Die Streifen 12 verhindern nämlich aus allen möglichen Blickrichtungen eine Direktsicht auf die hellen LEDs.

Zusätzlich oder alternativ zu der durch Licht-Rückkopplung erzielten Lichtmischung in der Lichtleitscheibe 10 kann vorgesehen sein, dass die jeweils den sich gegenüberliegenden Stirnflächen der Lichtleitscheibe zugeordneten LEDs unterschiedliche Lichttemperatur aufweisen. Beispielsweise können die Lichttemperaturen auf der einen Seite einem Bereich von etwa 2700°K bis 3000°K und auf der gegenüberliegenden Seite einem Bereich von 5000°K bis 6500°K entsprechen, so dass durch geeignete Ansteuerung eine optimale Tageslichtsimulation erfolgen kann. Diese Möglichkeit der Lichtmischung und auch der Tageslichtsimulation kann in entsprechender Weise vorteilhaft realisiert werden, wenn eine vierseitige Einstrahlung von LED-Licht in eine rechteckige Lichtleitscheibe erfolgt, wobei in diesem Fall die einander jeweils gegenüberliegenden LED-Leisten steuerungstechnisch zu einer Einheit zusammengefasst werden können.

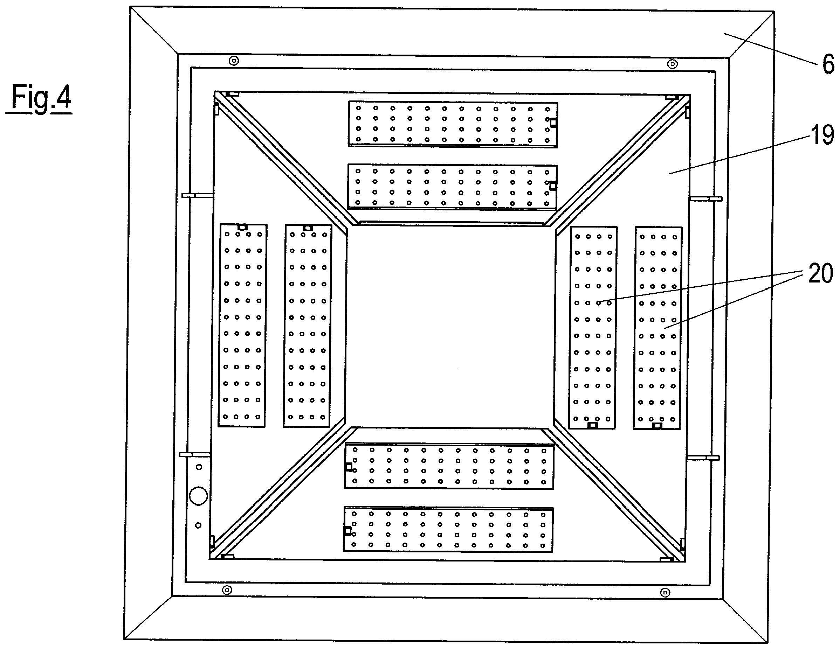

Fig. 4 zeigt eine Draufsicht auf die Rückseite einer Ausführungsform einer erfindungsgemäßen Leuchte, bei der zur Indirektlichterzeugung auf Trägerflächen 19 individuelle LED-Einheiten angeordnet sind. Die Trägerflächen 19 sind dabei in ihrer Ausrichtung, z.B. durch Biegeeffekte, verstellbar, so dass das Indirektlicht je nach Einsatzgebiet der Leuchte gezielt gerichtet werden kann. Die individuellen LED-Einheiten können auch zur RGB-Lichterzeugung ausgestaltet sein und auch zum Zwecke einer Tageslichtsimulation angesteuert und geregelt werden.

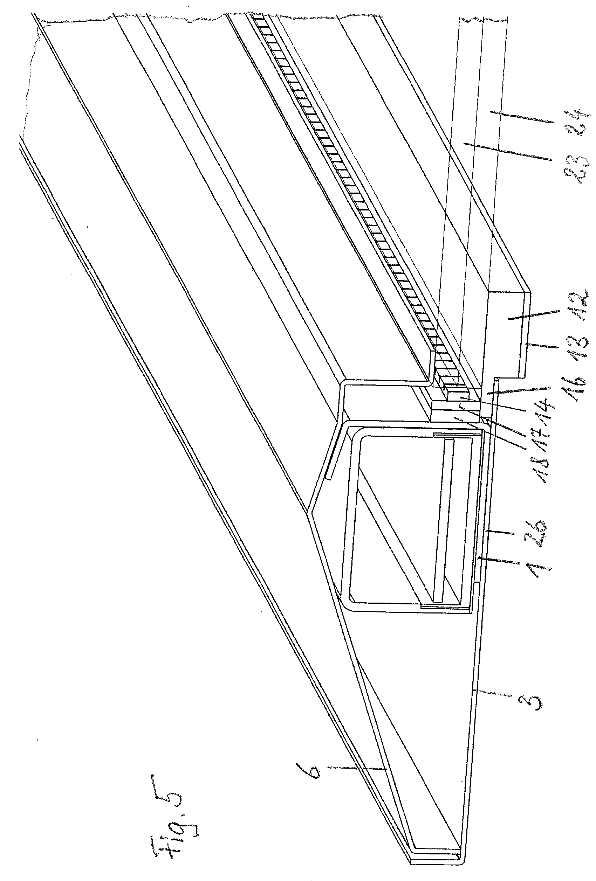

Fig. 5 zeigt eine Ausführungsvariante der Leuchte nach Fig. 3, d.h. eine Leuchte, bei der die zum Betrieb erforderlichen Komponenten im Montage- bzw. Trägerrahmen 1, 3, 6 untergebracht sind, bei der jedoch das von den LEDs 14 in die Lichtleitscheibe 23, 24 eingekoppelte Licht sowohl raumseitig nach unten als auch nach oben ausgekoppelt und somit Direktlicht und Indirektlicht erzeugt werden kann. Das nach unten ausgekoppelte Licht beaufschlagt in analoger Weise wie bei der Ausführungsform nach Fig. 3 auch den lichtdurchlässigen Streifen 12, wodurch die entsprechenden Wirkungen erzeugt werden. Der Anteil des nach oben ausgekoppelten Indirektlichts kann durch die in oder an der Lichtleitscheibe zum Einsatz kommenden Auskoppelstrukturen vorgegeben werden.

Im Falle der Ausführungsform nach Fig. 5 wird die Lichtleitscheibe von zwei aufeinander liegenden Teil-Lichtleitscheiben 23, 24 gebildet, und die LED-Streifenanordnung ist so positioniert, dass beide Teil-Lichtleitscheiben 23, 24 in etwa gleicher Weise mit Licht beaufschlagt werden. Es ist jedoch auch möglich, zur Erzielung eines deutlich höheren Lichtstroms jeder der Teil-Lichtscheiben 23, 24 eine eigene Reihe von LEDs 14 zuzuordnen. Dies eröffnet die zusätzliche Möglichkeit, für die jeweils einer der beiden Stirnseiten der Lichtleitscheiben 23, 24 zugeordneten LED-Einheiten 14 unterschiedliche Farbtemperaturen zu wählen, so dass eine gezielte Mischlichterzeugung erfolgen und die LED-Einheiten auch unterschiedlich geregelt werden können.

Charakteristisch für diese Ausführungsform ist, dass die transparente Lichtleitscheibe, die ein oder mehrteilig ausgebildet sein kann, im nicht eingeschalteten Zustand der Leuchte analog einer Fensterscheibe voll durchsichtig ist, da diese Durchsichtigkeit durch keinerlei Reflektor- oder Prismatikfolien beeinträchtigt oder beseitigt wird.

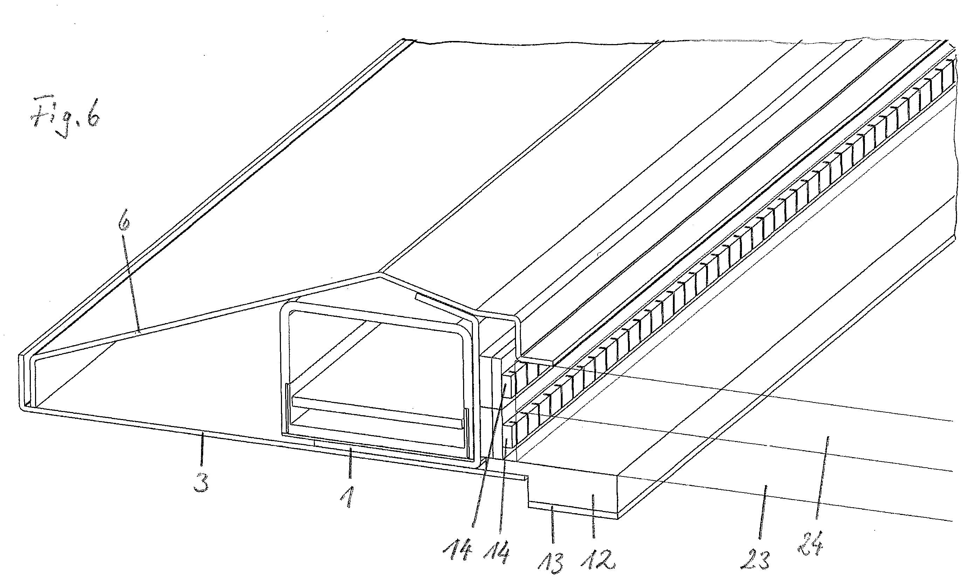

Fig. 6 zeigt die Ausführungsform einer Leuchte nach Fig. 5, bei der in der bereits erwähnten Weise jeder der Teil-Lichtleitscheiben 23, 24 eine eigene LED-Streifeneinheit 14 zugeordnet ist, wobei die LEDs unmittelbar an der jeweils polierten Stirnfläche der jeweiligen Teil-Lichtleitscheibe 23, 24 anliegen. Die Teil-Lichtleitscheiben 23, 24 besitzen bevorzugt gleiche Dicke, aber dies ist kein notwendiges Erfordernis.

Diese Ausführungsvariante zeichnet sich dadurch aus, dass die doppelte Lichtleistung bei gleichem Scheibenformat realisiert werden kann und bei den Mischsituationen, bei denen die Lichttemperaturen der beiden LED-Streifenanordnungen zur Mischung gedimmt werden, noch genügend Lichtstrom für die zu beleuchtende raumseitige Arbeitsfläche verfügbar ist.

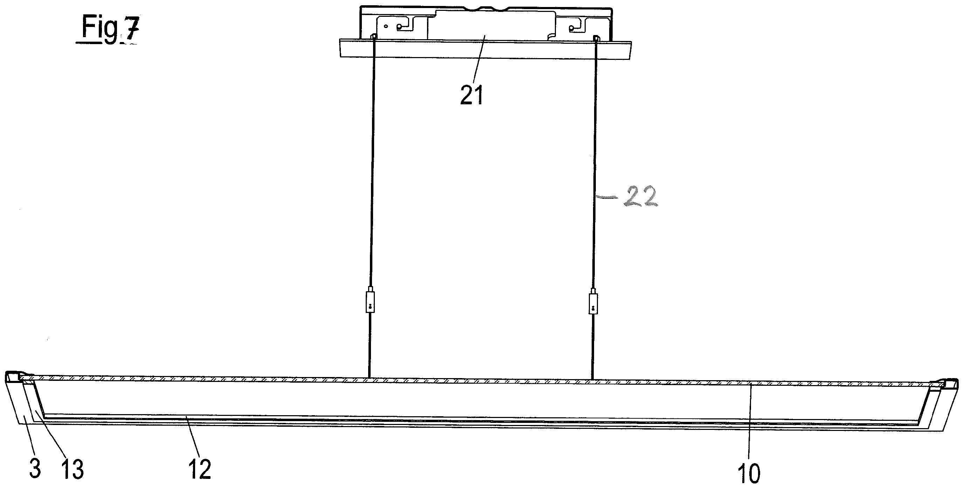

Fig. 7 zeigt in einer teilweise geschnitten dargestellten perspektivischen Ansicht eine Ausführungsform einer erfindungsgemäßen Leuchte, die sich durch eine besonders geringe Bauhöhe auszeichnet und dazu führt, dass ein transparentes minimalistisches Objekt mit maximaler Leichtigkeit und überraschender Ästhetik erhalten wird.

Erreicht wird dies insbesondere dadurch, dass unter Beibehaltung aller Vorteile der bereits geschilderten Ausführungsformen von erfindungsgemäßen Leuchten die elektrischen Komponenten, insbesondere Treiber und Steuergeräte, in einem separaten Gehäuse 21 angeordnet und über Niederspannungsleitungen mit den LEDs verbunden werden. Aus diesem Grunde kann der Montagerahmen in seiner Höhenabmessung bis auf die Höhenabmessung der LED-Printplatte reduziert und von einem U-förmigen Gehäuse gebildet werden, so dass die Gesamthöhe im Wesentlichen durch die Höhe der LED-Printplatte und die Höhe des randseitig umlaufenden Streifens 12 aus lichtdurchlässigem Material bestimmt wird.

Das die elektrischen Komponenten enthaltende Gehäuse 21 ist im Falle einer Pendelleuchte zur Deckenmontage ausgebildet, wobei bevorzugt die Tragseile 22 für die Leuchte gleichzeitig Niederspannungsleitungen bilden.

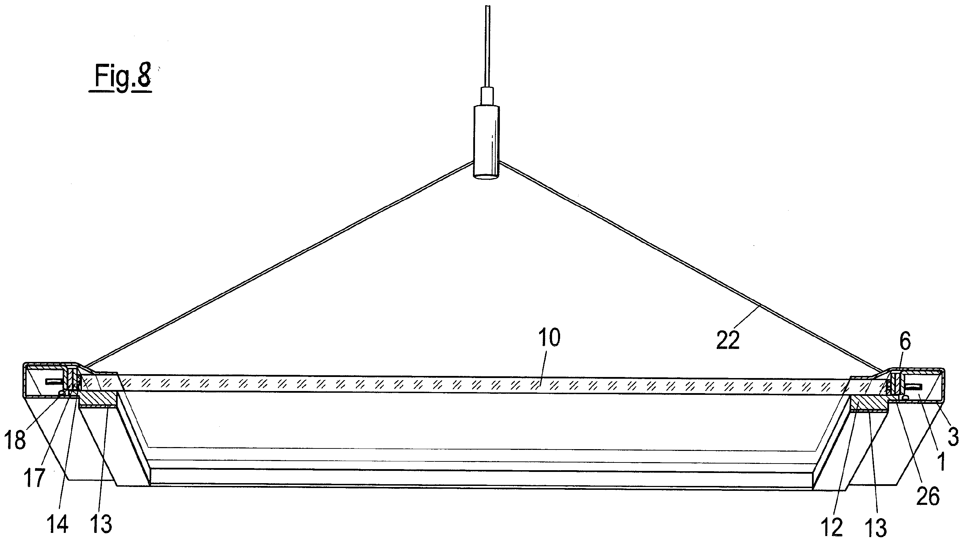

Fig. 8 zeigt die Leuchte nach Fig. 7 in einer perspektivischen Teilschnittdarstellung quer zur Längserstreckung, so dass die den bisher bereits geschilderten Ausführungsformen entsprechende Einkopplung von LED-Licht in die Lichtleitscheibe 10 erkennbar ist.

Das mit dem metallischen Trägerrahmen 1 verbundene Flachgehäuse ist wiederum zweiteilig ausgeführt und besteht aus der unteren Gehäusefläche 3 und der oberen Gehäuseabdeckung 6, die in diesem Falle lediglich aus einem Rahmenteil besteht, das die deckenseitige Abstrahlfläche für Indirektlicht begrenzt. Die sich jeweils über die Länge der Stirnfläche der Lichtleitscheibe erstreckenden LED-Streifen 14, die auf einem LED-Träger 17, welcher im Regelfall aus einem dünnen Alu-Material besteht, sind über eine elastische, wärmeleitende Zwischenschicht in Form eines thermisch leitenden Schaummaterials mit dem Trägerrahmen 1 verbunden.

Die Lichtleitscheibe 10 liegt mit ihrem gesamten Umfangsrand auf dem lichtdurchlässigen, insbesondere aus farbigem Material bestehendem Streifen 12 auf, welcher über einen Schenkelbereich auf dem innenliegenden Randbereich 26 der unteren Gehäusefläche abgestützt ist. Auch bei dieser Ausführungsform ist zumindest die Unterseite des lichtdurchlässigen Streifens 12 mit einer lichtundurchlässigen, streifenseitig reflektierend ausgebildeten Abdeckung 13 versehen, so dass sich die bereits geschilderten Licht-Rückkopplungseffekte ergeben, die eine Beeinflussung der Lichtfarbe der Lichtleitscheibe 10 gestatten.

Die Lichtauskopplung aus der Lichtleitscheibe 10 erfolgt durch die in der Oberseite der Lichtleitscheibe 10 vorgesehene Mikroprismenstrukturen, wobei zur Erzeugung des Direktlichtanteils reflektierende und zur Erzeugung des Indirektlichtanteils refraktive Strukturen vorgesehen sind.

Erfolgt keine seitliche Lichteinkopplung über die LEDs, d.h. Leuchte ausgeschaltet, dann ist die Lichtleitscheibe analog einer Fensterscheibe durchsichtig, was der Leuchte eine besondere Leichtigkeit in ihrem Erscheinungsbild verleiht.

Die in Fig. 8 als Pendelleuchte gezeigte Leuchte kann auch als Einbauleuchte verwendet werden, wobei in diesem Falle über die Deckenebene nur der rahmenförmige Lichtleitstreifen 12 übersteht.

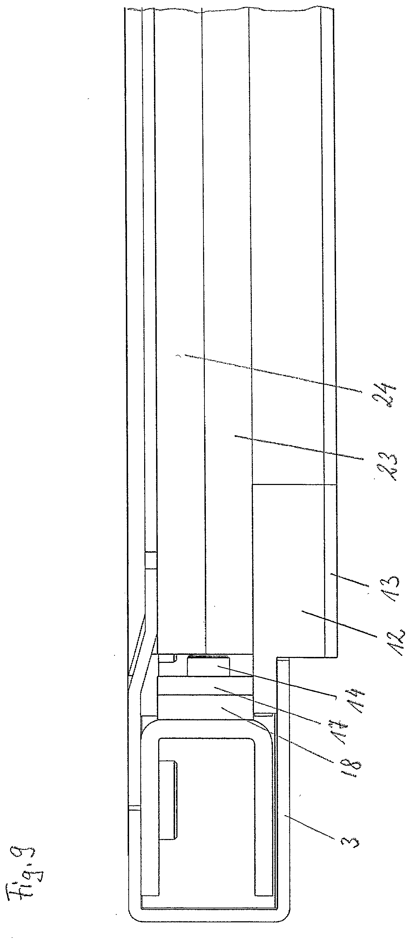

Fig. 9 zeigt eine Variante der sich durch eine minimale Bauhöhe auszeichnenden Leuchte nach Fig. 8, wobei anstelle einer einteiligen Lichtleitscheibe eine Doppelscheibenanordnung 23, 24 vorgesehen ist, wie sie bereits anhand der Fig. 5 erläutert wurde.

Auch bei dieser Ausführungsvariante kann jeder der Teil-Lichtleitscheiben 23, 24 eine eigenen LED-Streifeneinheit 14 zugeordnet werden, so dass sich die bereits im Zusammenhang mit Fig. 6 geschilderten entsprechenden Vorteile erzielen lassen.

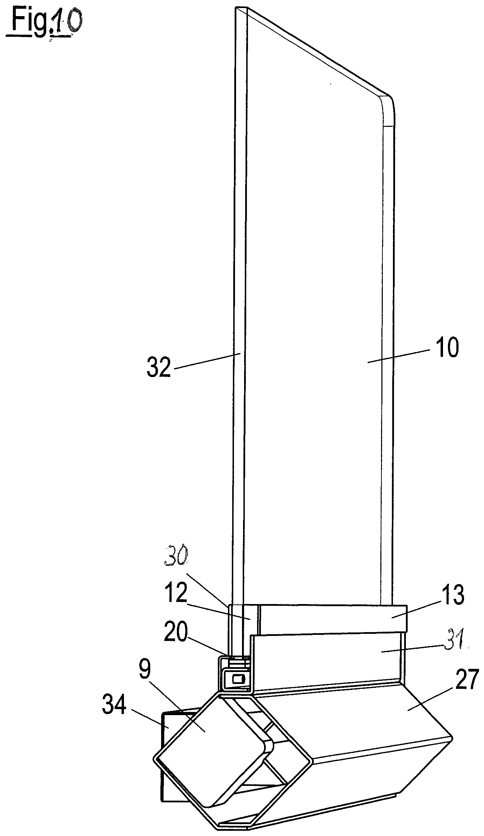

Fig. 10 zeigt eine nach dem erfindungsgemäßen Grundkonzept ausgebildete Wandleuchte, bei der die im nicht eingeschalteten Zustand durchsichtige Lichtleitscheibe 10 vertikal verläuft und in einer von Schenkeln 30, 31 gebildeten U-förmigen Aufnahme gehaltert ist.

Diese Aufnahme ist mit einem Trägerhohlprofil 27, in dem die elektrischen Komponenten 9 angeordnet sind, fest verbunden oder zumindest zum Teil integral ausgeführt. Mit dem Trägerhohlprofil 27 verbunden oder ebenfalls integral ausgeführt ist ein Wand-Befestigungsteil 34.

In der U-förmigen Aufnahme ist bodenseitig ein Trägerorgan für die LED-Leiste analog den bisher bereits beschriebenen Ausführungsformen vorgesehen, so dass LED-Licht wiederum über die polierte Stirnfläche in die Lichtleitscheibe 10 eingekoppelt werden kann, deren freiliegende Stirnflächen 32 unpoliert sind, wie dies stets gilt, wenn Stirnflächen der Lichtleitscheibe nicht zur Einkopplung von Licht verwendet sind. Diese Stirnflächen können auch mit reflektierendem Material belegt sein.

Zwischen der Lichtleitscheibe 10 und dem Schenkel 31 der U-förmigen Aufnahme, d.h. an der von der Wand abgewandten Seite, ist wiederum ein vorzugsweise farbiger lichtdurchlässiger Streifen 12 gehaltert, der über den Schenkel 31 übersteht. Auf diese Weise lassen sich wiederum die bereits geschilderten Effekte der Lichtmischung in der Lichtleitscheibe 10, die wandseitig eine Auskoppelprismatik besitzt, erzielen. Eine Wandleuchte dieser Art ist zum einen im zugeschalteten Zustand ästhetisch reizvoll und lichtstark, tritt jedoch im ausgeschalteten Zustand kaum in Erscheinung, da in diesem Falle die Lichtleitscheibe 10 vollständig durchsichtig ist.

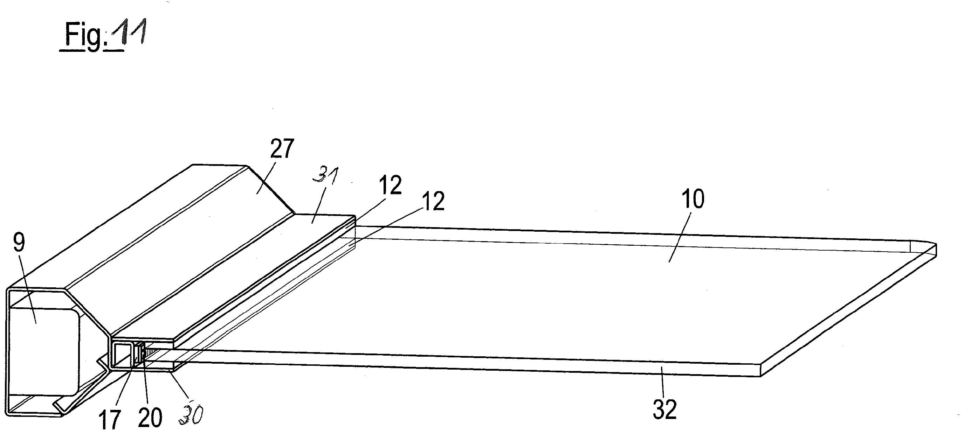

Fig. 11 zeigt eine Wandleuchte etwa analog der Ausführungsform nach Fig. 10, wobei jedoch die Lichtleitscheibe 10 horizontal angeordnet ist und in diesem Falle lichtdurchlässige Streifen 12 innerhalb der von den Schenkeln 28 und 29 gebildeten U-förmigen Aufnahme beiderseits der Lichtleitscheibe 10 angeordnet sind. Die im Zusammenhang mit der Fig. 10 geschilderten lichttechnischen Besonderheiten gelten auch für diese Ausführungsform.

Nach den erfindungsgemäßen Grundprinzipien kann auch eine Pendelleuchte geschaffen werden, bei der beiderseits einer mittigen Trägereinheit rahmenlose Lichtleitscheiben vorgesehen sind, die im nicht eingeschaltetem Zustand der Leuchte durchsichtig sind und demgemäß optisch kaum in Erscheinung treten. In lichttechnischer Hinsicht können bei einer derartigen Pendelleuchte all die bei den vorgehend beschriebenen Ausführungsformen erläuterten Effekte und Vorteile realisiert werden.

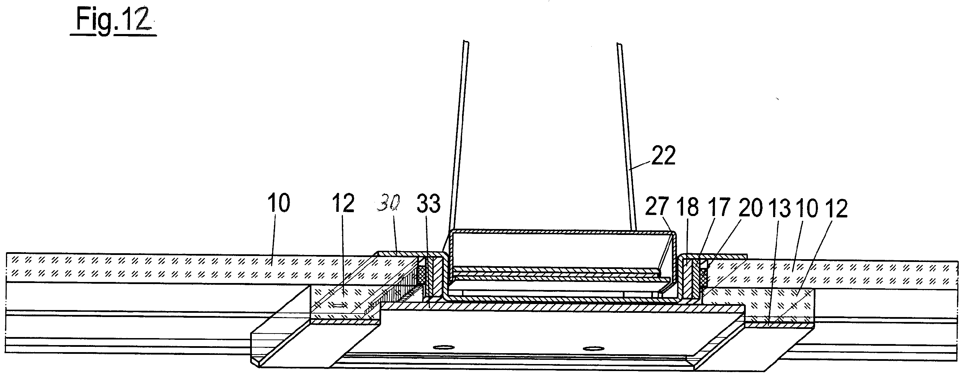

Fig. 12 zeigt ein Beispiel für den möglichen Aufbau des mittigen Trägerteils 33 einer derartigen Pendelleuchte, wobei ggf. in dem sich über die Länge der Leuchte erstreckenden Trägerhohlprofil 27 die erforderlichen elektrischen Komponenten untergebracht werden können, die bevorzugt aber in einer getrennten Einheit vorgesehen werden. Durch die Kombination eines mittensymmetrischen Formteils zur Bildung der oben liegenden Schenkel 30 für eine U-förmige Aufnahme mit einer den Bereich zwischen den beiden Lichtleitscheiben 10 überdeckenden unteren Trägerplatte 33 wird ein konstruktiv einfacher Gesamtaufbau geschaffen, der es in optimaler Weise ermöglicht, die bereits beschriebenen Strukturen von LED-Leisten 20 mit zugehörigen Trägern 17, 18 sowie die Lichtleitscheiben 10 und die zugehörigen lichtdurchlässigen Streifen 12 aufzunehmen. Die mittig gelegene Trägerplatte 33 wird über die lichtdurchlässigen Streifen 12 mit Indirektlicht beaufschlagt, so dass sich reizvolle Farbkontraste unter Berücksichtigung der lichtundurchlässigen Abdeckung 13 über die Gesamtfläche der Leuchte erzielen lassen.

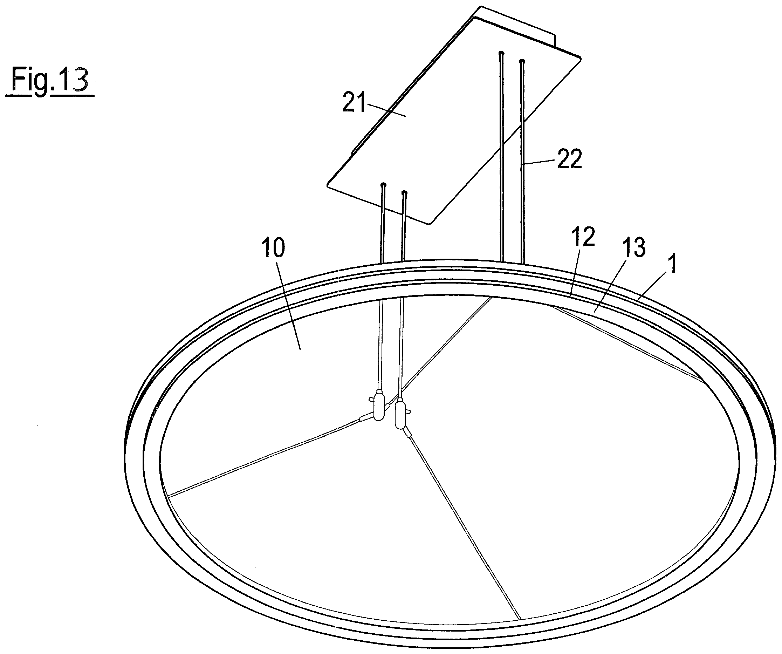

Anhand der Fig. 13 wird verdeutlicht, dass das erfindungsgemäße Grundkonzept nicht nur in Rechteck-Leuchten sondern auch in Rundleuchten realisierbar ist, und zwar sowohl in Form von Pendelleuchten als auch in Form von Einbau- und gegebenenfalls auch Aufbauleuchten.

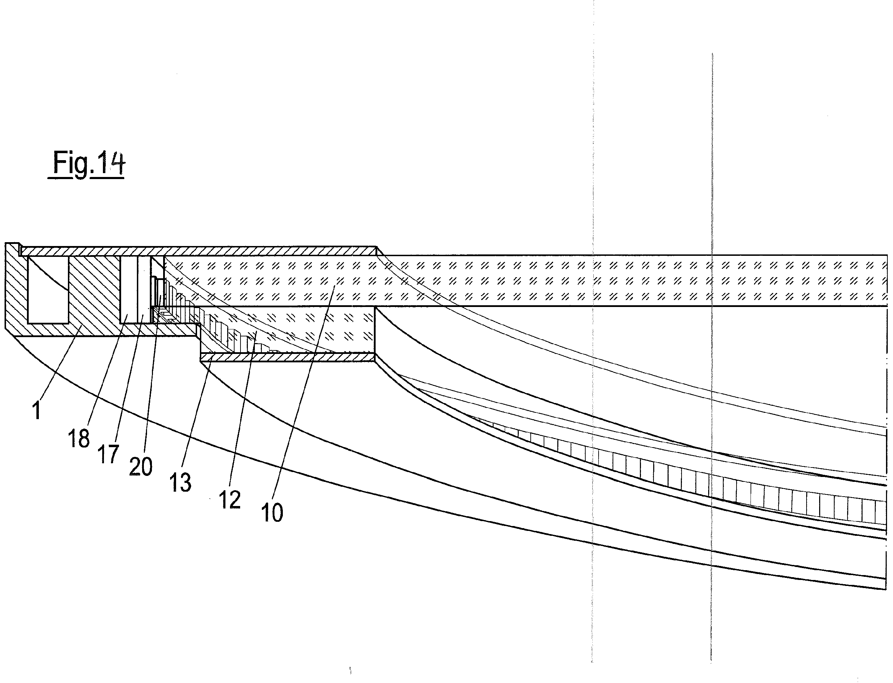

Der Montagerahmen umschließt die kreisförmige Lichtleitscheibe 10 in Form eines Ringrahmens, und innerhalb dieses Ringrahmens sind wiederum die LEDs über den gesamten Umfang verteilt - wie dies in der Teilschnittdarstellung nach Fig. 14 zu sehen ist - analog zu den Rechteck-Gestaltungen von Leuchten angebracht.

Die im Rahmen der Erfindung erreichbaren Licht-Misch- und Licht-Steuerungseffekte sowie vor allem auch die erzielbaren Ausblendwirkungen sowohl hinsichtlich von Direktsicht auf die Leuchtmittel als auch hinsichtlich der Reflexblendung lassen sich bei allen Ausführungsvarianten in analoger Weise erzielen.

### Bezugszeichenliste

- 1: Montagerahmen bzw. Trägerrahmen
- 2: Direktlichtoptik mit zweiter Lichtebene
- 3: untere Gehäusefläche
- 4: Indirektlichtwanne
- 5: LED-Bestückung
- 6: obere Gehäuseabdeckung
- 7: Diffusoroptik
- 8: Aufhängeöse
- 9: elektrische Komponenten
- 10: Lichtleitscheibe
- 11: Prismatikfläche
- 12: lichtdurchlässiger Streifen
- 13: Abdeckung
- 14: LEDs
- 15: Reflektorfolie
- 16: Klemmschenkel
- 17: LED-Träger
- 18: elastische, wärmeleitende Zwischenschicht
- 19: Trägerfläche
- 20: LED-Einheiten
- 21: Gehäuse
- 22: Seile, Leiter
- 23: Teil-Lichtleitscheibe
- 24: Teil-Lichtleitscheibe
- 25: polierte Stirnfläche
- 26: Stütz-Randbereich
- 27: Trägerhohlprofil
- 28: Schenkel
- 29: Öffnungen
- 30: Schenkel
- 31: Schenkel
- 32: unpolierte Stirnfläche
- 33: mittige Trägerplatte
- 34: Befestigungsteil

## Patentansprüche

1. Leuchte mit einer zumindest teilweise von einem Rahmen umschlossenen, eine raumseitige Direktlichtfläche bildenden Lichtleitscheibe,
wobei zwischen dem Rahmen und wenigstens einer Stirnfläche der Lichtleitscheibe jeweils eine Mehrzahl von LEDs zur Einkopplung von Licht in die jeweilige Stirnfläche der Lichtleitscheibe vorgesehen ist, wobei
die Licht emittierenden Flächen der LEDs (14) luftspaltfrei an der jeweiligen polierten Stirnfläche (25) der transparent ausgebildeten Lichtleitscheibe (10) anliegen,
**dadurch gekennzeichnet,**
**dass** die Lichtleitscheibe von zwei aufeinanderliegenden Teil-Lichtscheiben (23, 24) gebildet ist,
**dass** zumindest raumseitig an der Lichtleitscheibe (10) anliegend ein den LEDs zugeordneter, randseitiger, aus lichtdurchlässigem Material bestehender Streifen (12) angeordnet ist, dessen Farbe in Abhängigkeit von der gewünschten, durch Lichtrückführung aus dem Streifen bewirkten Mischlichterzeugung in der Lichtleitscheibe (10) gewählt ist, und
**dass** die Breite und die Dicke des lichtdurchlässigen Streifens (12) so dimensioniert sind,
**dass** der Streifen (12) bezüglich der LEDs (14) einen aus allen Blickrichtungen wirksamen Ausblendschutz bildet und
über die Lichtleitscheibe (10) eingekoppeltes Licht einerseits in vorgebbare Richtungen abstrahlt und andererseits zurück in die Lichtleitscheibe (10) leitet.

2. Leuchte nach Anspruch 1,
**dadurch gekennzeichnet,**
**dass** der bezüglich der Lichtleitscheibe insbesondere umlaufend ausgebildete Streifen (12) an seiner Unterseite mit einer Voll- oder Teilabdeckung (13) aus lichtundurchlässigem Material versehen ist.

3. Leuchte nach Anspruch 2,
**dadurch gekennzeichnet,**
**dass** die Voll- oder Teilabdeckung (13) an der Kontaktfläche mit dem bevorzugt aus farbigem Material bestehenden lichtdurchlässigen Streifen (12) reflektierend ausgebildet ist.

4. Leuchte nach Anspruch 1, 2 oder 3,
**dadurch gekennzeichnet,**
**dass** zur mechanischen Vorspannungserzeugung und zum Toleranzausgleich zwischen den LEDs (14) und dem Rahmen (1) eine wärmeleitend und elastisch ausgebildete, insbesondere aus geschäumtem Material bestehende Zwischenschicht (18) vorgesehen ist.

5. Leuchte nach einem oder mehreren der vorhergehenden Ansprüche,
**dadurch gekennzeichnet,**
**dass** die jeweils den sich gegenüberliegenden Stirnflächen (25) der Lichtleitscheibe (10) zugeordneten LEDs (14) oder bei vierseitiger Einstrahlung die den beiden sich gegenüberliegenden Stirnflächenpaaren zugeordneten LEDs zur vorzugsweise steuerbaren Mischlichtbildung in der Lichtleitscheibe (10) unterschiedliche Lichttemperatur aufweisen, die insbesondere auf der einen Seite dem Bereich von etwa 2700°K bis 3000°K und auf der gegenüberliegenden Seite bzw. dem anderen Stirnflächenpaar dem Bereich von 5000°K bis 6500°K entsprechen und vorzugsweise zur Tageslichtsimulation regelbar sind.

6. Leuchte nach einem oder mehreren der vorhergehenden Ansprüche,
dadurch **gekennzeichne**t,
dass der Lichtleitscheibe (10) zur Beeinflussung der Leuchtdichte und/oder der Abstrahlcharakteristik ein- oder beidseitig an der Lichtleitscheibe (10) anliegende Prismatik- oder Reflektorfolien (11, 15) zugeordnet sind oder eine Oberfläche der Lichtleitscheibe mit einem gleichmäßig über die Gesamtfläche verteilten, Licht reflektierenden, streuenden und auskoppelnden Strukturen versehen ist.

7. Leuchte nach einem oder mehreren der vorhergehenden Ansprüche,
**dadurch gekennzeichnet,**
**dass** mit dem Profilrahmen eine untere flachrahmenförmige Gehäusefläche (3) verbunden ist, auf deren innenliegendem Randbereich (26) die Lichtleitscheibe (10) abgestützt ist, und
**dass** der umlaufende lichtdurchlässige Streifen (12) einen zwischen der Lichtleitscheibe (10) und dem Stütz-Randbereich (26) der unteren Gehäusefläche (3) gelegenen Klemmschenkel (16) aufweist.

8. Leuchte nach einem der vorhergehenden Ansprüche,
**dadurch gekennzeichnet,**
**dass** die Lichtleitscheibe (10) aus einer Doppelscheibenanordnung (23, 24) besteht, die stirnseitig vorzugsweise mittig von einer LED-Streifeneinheit (20) oder durch zwei übereinander angeordnete und jeweils einer Stirnfläche einer Einzelscheibe zugeordnete LED-Streifeneinheiten (20) mit Licht beaufschlagbar ist.

9. Leuchte nach einem oder mehreren der vorhergehenden Ansprüche,
**dadurch gekennzeichnet,**
**dass** der Rahmen (1) aus einem zumindest einen vertikalen und einen raumseitigen horizontalen Schenkel aufweisenden, einen Montagerahmen, insbesondere für elektrische Komponenten, Verdrahtungen und Kühlkörper, bildenden Profilrahmen besteht,
**dass** mit dem Profilrahmen eine untere flachrahmenförmige Gehäusefläche (3) verbunden ist, auf deren innenliegendem Randbereich (26) die Lichtleitscheibe (10) abgestützt ist, und
**dass** der umlaufende lichtdurchlässige Streifen (12) einen zwischen der Lichtleitscheibe (10) und dem Stütz-Randbereich (26) der unteren Gehäusefläche (3) gelegenen Klemmschenkel (16) aufweist.

10. Leuchte nach einem oder mehreren der Ansprüche 1 bis 8,
**dadurch gekennzeichnet,**
**dass** der Rahmen als U-förmiger, zumindest im Wesentlichen das Außengehäuse (3, 6) der Leuchte bildender, flacher Profilrahmen ausgeführt ist,
**dass** im Profilrahmen ein metallischer, insbesondere abgewinkelt ausgebildeter Träger (1) für eine mit einem LED-Träger (17) verbundene, bevorzugt elastische und wärmeleitende Zwischenschicht (8) vorgesehen ist,
**dass** der umlaufende lichtdurchlässige Streifen (12) auf dem raumseitigen Schenkel des Profilrahmens (3, 6) und die Lichtleitscheibe (10) auf dem Streifen (12) abgestützt ist, und
**dass** die elektrischen Komponenten, insbesondere Treiber und Steuergeräte, in einem separaten Gehäuse (21) angeordnet und über Niederspannungsleitungen mit den LEDs verbunden sind.

11. Leuchte nach Anspruch 10,
**dadurch gekennzeichnet,**
**dass** das separate Gehäuse (21) zur Deckenmontage ausgebildet ist und die Tragseile (22) für die Leuchte gleichzeitig Niederspannungsleitungen zur Speisung der LEDs (20) bilden.

12. Leuchte nach einem oder mehreren der vorhergehenden Ansprüche,
**dadurch gekennzeichnet,**
**dass** zur Schaffung einer rahmenlosen horizontalen oder vertikalen Wandleuchte ein Trägerhohlprofil (27) zur Aufnahme der elektrischen Komponenten (9) und zur Halterung eines Randbereichs einer Lichtleitscheibe (10) vorgesehen ist, und
**dass** die Halterung U-förmig ausgebildet ist und die an der Stirnseite der Lichtleitscheibe (10) anliegenden LED's (14) sowie den einseitig oder die beidseitig zwischen den Schenkeln (30, 31) der U-förmigen Halterung und der Lichtleitscheibe (10) angeordneten lichtdurchlässigen Streifen (12) aufnimmt.

13. Leuchte nach einem oder mehreren der vorhergehenden Ansprüche,
**dadurch gekennzeichnet,**
**dass** zur Schaffung einer rahmenlosen, mittensymmetrischen Leuchte, insbesondere einer Pendelleuchte, ein langgestrecktes, aus mehreren Komponenten bestehendes, insbesondere zur Aufnahme aller zum Leuchtenbetrieb erforderlichen elektronischen Komponenten bestimmtes Profilgehäuse mit seitlich angeordneten, sich über die Gehäuselänge erstreckenden U-förmigen Aufnahmen vorgesehen ist,
**dass** in jeder der U-förmigen Aufnahmen ein Randbereich einer Lichtleitscheibe (10), deren Breite einem Mehrfachen der Breite des Profilgehäuses entspricht, sowie zumindest ein an einer Seite des Randbereichs der Lichtleitscheibe (10) anliegender lichtdurchlässiger Streifen (12) gehaltert sind, und
**dass** die an den polierten Stirnseiten der Lichtleitscheiben (10) anliegenden LEDs (14) über eine wärmeleitende Struktur mit dem Boden der U-förmigen Aufnahme verbunden sind.

14. Leuchte nach Anspruch 1,
**dadurch gekennzeichnet,**
**dass** jeder Teil-Lichtscheibe (23, 24) eine eigene Reihe von LEDs zugeordnet ist, wobei die LED-Reihen vorzugsweise unterschiedliche Farbtemperatur besitzen und insbesondere unterschiedlich geregelt werden können.

## Claims

1. A luminaire comprising a light guide plate which is at least partly surrounded by a frame and which forms a direct light surface at the room side,
wherein a respective plurality of LEDs are provided between the frame and at least one end face of the light guide plate to couple light into the respective end face of the light guide plate; and
wherein
light emitting surfaces of the LEDs (14) contact the respective polished end face (25) of the transparent light guide plate (10) without air gaps,
**characterized in that**
the light guide plate is formed by two consecutive individual light plates (23, 24);
**in that** a strip (12) at the margin side comprising light permeable material and associated with the LEDs is arranged contacting the light guide plate (10) at least at the room side and the color of said strip is selected in dependence on the desired mixed light generation in the light guide plate (10) effected by light return from the strip; and
**in that** the width and the thickness of the light permeable strip (12) are dimensioned such that
the strip (12) forms masking protection effective from all viewing directions with respect to the LEDs (14) and
such that light coupled in via the light guide plate (10) irradiates in predefinable directions, on the one hand, and leads back into the light guide plate (10), on the other hand.

2. A luminaire in accordance with claim 1,
**characterized in that**
the strip (12) in particular formed peripherally with respect to the light guide plate is provided at its lower side with a complete or part cover (13) composed of light impermeable material.

3. A luminaire in accordance with claim 2,
**characterized in that**
the complete or part cover (13) is configured as reflective at a contact surface with the light permeable strip (12) preferably comprising colored material.

4. A luminaire in accordance with claim 1, claim 2 or claim 3,
**characterized in that**
an intermediate layer (18) configured as thermally conductive and elastic and in particular comprising foamed material is provided between the LEDs (14) and the frame (1) for a mechanical preload generation and for tolerance compensation.

5. A luminaire in accordance with one or more of the preceding claims,
**characterized in that**
the LEDs (14) respectively associated with the mutually oppositely disposed end faces (25) of the light guide plate (10) or, on an irradiation at four sides, the LEDs associated with the two end face pairs disposed opposite one another have different light temperatures for mixed light formation, preferably controllable mixed light formation, in the light guide plate (10), said light temperatures in particular corresponding to a range from approximately 2700°K to 3000°K at the one side and to a range from 5000°K to 6500°K at the oppositely disposed side or at the other end face pair and preferably being able to be regulated for daylight simulation.

6. A luminaire in accordance with one or more of the preceding claims,
**characterized in that**
prismatic films or reflector films (11, 15) contacting the light guide plate (10) at one side or at both sides are associated with the light guide plate (10) to influence the luminance and/or the irradiation characteristic; or **in that** a surface of the light guide plate is provided with structures which are distributed uniformly over the total surface and which reflect, scatter and decouple light.

7. A luminaire in accordance with one or more of the preceding claims,
**characterized in that**
a lower housing surface (3) in the form of a flat frame is connected to a sectional frame and the light guide plate (10) is supported at an inwardly disposed marginal region (26) of said lower housing surface (3); and
**in that** the peripheral light permeable strip (12) has a clamping limb (16) disposed between the light guide plate (10) and the support marginal region (26) of the lower housing surface (3).

8. A luminaire in accordance with any one of the preceding claims,
**characterized in that**
the light guide plate (10) comprises a double plate arrangement (23, 24) which can be acted on by light at the end face, preferably centrally, by an LED strip unit (20) or by two LED strip units (20) which are arranged above one another and which are associated with a respective end face of a single plate.

9. A luminaire in accordance with one or more of the preceding claims,
**characterized in that**
the frame (1) comprises a sectional frame which has at least one vertical limb and one room-side horizontal limb and which forms an assembly frame, in particular for electrical components, wiring and heat sinks;
**in that** a lower housing surface (3) in the form of a flat frame is connected to the sectional frame and the light guide plate (10) is supported at the inwardly disposed marginal region (26) of said lower housing surface (3); and
**in that** the peripheral light permeable strip (12) has a clamping limb (16) disposed between the light guide plate (10) and the support marginal region (26) of the lower housing surface (3).

10. A luminaire in accordance with one or more of the claims 1 to 8,
**characterized in that**
the frame is designed as a U-shaped, flat sectional frame which at least substantially forms the outer housing (3, 6) of the luminaire; **in that** a metallic support (1) which is in particular angled is provided in the sectional frame for an intermediate layer (8) which is connected to an LED support (17) and which is preferably elastic and thermally conductive;
**in that** the peripheral light permeable strip (12) is supported at the limb of the sectional frame (3, 6) at the room side and the light guide plate (10) is supported at the strip (12); and
**in that** the electrical components, in particular drivers and control devices, are arranged in a separate housing (21) and are connected to the LEDs via low voltage lines.

11. A luminaire in accordance with claim 10,
**characterized in that**
the separate housing (21) is configured for ceiling assembly; and **in that** support cables (22) for the luminaire simultaneously form low voltage lines for feeding the LEDs (20).

12. A luminaire in accordance with one or more of the preceding claims,
**characterized in that**
a hollow support section (27) for receiving the electrical components (9) and for holding a marginal region of a light guide plate (10) is provided to produce a frameless horizontal or vertical wall luminaire; and
**in that** the holder is U-shaped and receives the LEDs (14) contacting the end face of the light guide plate (10) and the light permeable strip (12) arranged at one side or the light permeable strips (12) arranged at both sides between the limbs (30, 31) of the U-shaped holder and the light guide plate (10).

13. A luminaire in accordance with one or more of the preceding claims,
**characterized in that**
an elongated sectional housing is provided to produce a frameless, centrally symmetrical luminaire, in particular a suspended luminaire, said sectional housing comprising a plurality of components, in particular being intended for the reception of all the electronic components required for the luminaire operation, and having laterally arranged U-shaped receivers extending over the housing length;
**in that** a marginal region of a light guide plate (10) whose width corresponds to a multiple of the width of the sectional housing and at least one light permeable strip (12) contacting a side of the marginal region of the light guide plate (10) are held in each of the U-shaped receivers; and
**in that** the LEDs (14) contacting the polished end faces of the light guide plates (10) are connected to the base of the U-shaped receiver via a thermally conductive structure.

14. A luminaire in accordance with claim 1,
**characterized in that**
a separate row of LEDs is associated with each individual light plate (23, 24), with the LED rows preferably having different color temperatures and in particular being able to be regulated differently.

## Revendications

1. Lampe comportant un disque conducteur de lumière entouré au moins partiellement par un cadre et formant une surface lumineuse directe côté espace intérieur,
dans laquelle
il est prévu respectivement une pluralité de diodes électroluminescentes entre le cadre et au moins une surface frontale du disque conducteur de lumière pour injecter de la lumière dans la surface frontale respective du disque conducteur de lumière,
les surfaces émettrices de lumière des diodes électroluminescentes (14) sont en appui sans entrefer contre la surface frontale polie respective (25) du disque conducteur de lumière (10) réalisé transparent,
**caractérisée en ce que**
le disque conducteur de lumière est formé par deux disques de lumière partiels (23, 24) superposés,
une bande de bord (12) constituée en matériau translucide et associée aux diodes électroluminescentes est agencée en appui contre le disque conducteur de lumière (10) au moins du côté espace intérieur, bande dont la couleur est choisie en fonction de la génération de lumière mixte désirée, provoquée par le retour de lumière hors de la bande, dans le disque conducteur de lumière (10), et
la largeur et l'épaisseur de la bande translucide (12) sont dimensionnées de telle sorte que
la bande (12) constitue une protection anti-éblouissement par rapport aux diodes électroluminescentes (14), qui est efficace depuis toutes les directions de vue, et que
la lumière injectée par le disque conducteur de lumière (10) rayonne d'une part dans des directions prédéterminées et mène d'autre part en retour vers le disque conducteur de lumière (10).

2. Lampe selon la revendication 1,
**caractérisée en ce que**
sur sa face inférieure, la bande (12) réalisée en particulier périphérique par rapport au disque conducteur de lumière est pourvue d'un recouvrement complet ou partiel (13) en un matériau opaque.

3. Lampe selon la revendication 2,
**caractérisée en ce que**
le recouvrement complet ou partiel (13) est réalisé réfléchissant sur la surface de contact avec la bande translucide (12) constituée de préférence en matériau de couleur.

4. Lampe selon la revendication 1, 2 ou 3,
**caractérisée en ce que**
pour la génération d'une précontrainte mécanique et pour la compensation de tolérances, il est prévu une couche intermédiaire (18) réalisée de façon thermoconductrice et élastique, en particulier en matériau moussé, entre les diodes électroluminescentes (14) et le cadre (1).

5. Lampe selon l'une ou plusieurs des revendications précédentes,
**caractérisée en ce que**
les diodes électroluminescentes (14) associées respectivement aux surfaces frontales (25) opposées du disque conducteur de lumière (10) ou, dans le cas d'une irradiation sur quatre côtés, les diodes électroluminescentes associées aux deux paires opposées de surfaces frontales présentent différentes températures de lumière pour la génération, de préférence commandée, de lumière mixte dans le disque conducteur de lumière (10), qui correspondent en particulier sur un côté à la plage d'environ 2700 °K à 3000 °K et sur le côté opposé ou sur l'autre paire de surfaces frontales à une plage de 5000 °K à 6500 °K et qui peuvent de préférence être régulées pour la simulation de la lumière diurne.

6. Lampe selon l'une ou plusieurs des revendications précédentes,
**caractérisée en ce que**
des films prismatiques ou réfléchissants (11, 15) appliqués sur un côté ou de part et d'autre sur le disque conducteur de lumière (10) sont associés au disque conducteur de lumière (10) pour influencer la luminance et/ou la caractéristique de rayonnement, ou une surface du disque conducteur de lumière est pourvue de structures qui sont réparties régulièrement sur toute la surface et qui réfléchissent, diffusent et extraient la lumière.

7. Lampe selon l'une ou plusieurs des revendications précédentes,
**caractérisée en ce que**
une surface de boîtier (3) inférieure en forme de cadre plat est reliée au cadre profilé, dont la zone de bord intérieure (26) sert d'appui au disque conducteur de lumière (10), et **en ce que**
la bande translucide périphérique (12) comprend une branche de serrage (16) située entre le disque conducteur de lumière (10) et la zone de bord d'appui (26) de la surface de boîtier inférieure (3).

8. Lampe selon l'une ou plusieurs des revendications précédentes,
**caractérisée en ce que**
le disque conducteur de lumière (10) est constitué par un agencement à disque double (23, 24) qui peut être sollicité avec la lumière du côté frontal de préférence au milieu par un ensemble de diode électroluminescente/bande (20) ou par deux ensembles de diode électroluminescente/bande (20) agencés l'un au-dessus de l'autre et associés chacun à une surface frontale d'un disque individuel.

9. Lampe selon l'une ou plusieurs des revendications précédentes,
**caractérisée en ce que**
le cadre (1) est constitué par un cadre profilé comprenant au moins une branche verticale et une branche horizontale côté espace intérieur, un cadre de montage, en particulier pour des composants électriques, des câblages et des corps de refroidissement, **en ce que**
une surface de boîtier (3) inférieure en forme de cadre plat est reliée au cadre profilé, dont la zone de bord intérieure (26) sert d'appui au disque conducteur de lumière (10), et **en ce que**
la bande translucide périphérique (12) comprend une branche de serrage (16) située entre le disque conducteur de lumière (10) et la zone de bord d'appui (26) de la surface de boîtier inférieure (3).

10. Lampe selon l'une ou plusieurs des revendications 1 à 8,
**caractérisée en ce que**
le cadre est réalisé sous forme de cadre profilé plat en forme de U constituant au moins sensiblement le boîtier extérieur (3, 6) de la lampe, **en ce que**
un support (1) métallique, en particulier coudé, est prévu dans le cadre profilé pour une couche intermédiaire (8) reliée à un support de diode électroluminescente (17) et de préférence élastique et thermoconductrice, **en ce que**
la bande translucide périphérique (12) est appuyée sur la branche côté espace intérieur du cadre profilé (3, 6) et le disque conducteur de lumière (10) est appuyé sur la bande (12), et **en ce que**
les composants électriques, en particulier les pilotes et les contrôleurs, sont agencés dans un boîtier séparé (21) et sont connectés aux diodes électroluminescentes par des lignes basse tension.

11. Lampe selon la revendication 10,
**caractérisée en ce que**
le boîtier séparé (21) est réalisé pour le montage au plafond et les câbles de suspension (22) pour la lampe constituent à la fois des lignes basse tension pour alimenter les diodes électroluminescentes (20).

12. Lampe selon l'une ou plusieurs des revendications précédentes,
**caractérisée en ce que**
pour créer une lampe murale horizontale ou verticale dépourvue de cadre, il est prévu un profilé creux porteur (27) pour loger les composants électriques (9) et pour monter une zone de bord d'un disque conducteur de lumière (10), et **en ce que**
la monture est réalisée en forme de U et reçoit les diodes électroluminescentes (14) en appui contre la face frontale du disque conducteur de lumière (10) ainsi que la bande translucide (12) agencée sur un côté ou de part et d'autre entre les branches (30, 31) de la monture en forme de U et le disque conducteur de lumière (10).

13. Lampe selon l'une ou plusieurs des revendications précédentes,
**caractérisée en ce que**
pour créer une lampe symétrique en son centre et dépourvue de cadre, en particulier une lampe à suspension, il est prévu un boîtier profilé allongé constitué de plusieurs composants, destiné en particulier à recevoir tous les composants électroniques nécessaires pour le fonctionnement de la lampe, qui comprend des logements en forme de U agencés latéralement et s'étendant sur la longueur du boîtier, **en ce que**
dans chacun des logements en forme de U sont montées une zone de bord d'un disque conducteur de lumière (10) dont la largeur correspond à un multiple de la largeur du boîtier profilé, ainsi qu'au moins une bande translucide (12) en appui sur un côté de la zone de bord du disque conducteur de lumière (10), et **en ce que**
les diodes électroluminescentes (14) en appui contre les faces frontales polies des disques conducteurs de lumière (10) sont reliées au fond du logement en forme de U par une structure thermoconductrice.

14. Lampe selon la revendication 1,
**caractérisée en ce que**
une propre rangée de diodes électroluminescentes est associée à chaque disque de lumière partiel (23, 24), les rangées de diodes électroluminescentes possédant de préférence différentes températures de lumière et pouvant en particulier être régulées différemment.
